# FASCICULE DE BREVET EUROPEEN

(11) **EP 1 462 298 B1**
(45) Date de publication et mention de la délivrance du brevet: **09.01.2008**
(21) Numéro de dépôt: 04300159.3
(22) Date de dépôt: 24.03.2004
(51) Int. Cl.: B60K 37/04

(54) **Corps de planche de bord de véhicule automobile comportant des moyens de fixation d'un compteur**
Armaturenbrett eines Kraftfahrzeugs mit Befestigungselementen für ein Instrument
Instrument panel of a motor vehicle with fixing devices for an instrument

(30) Priorité: 26.03.2003 FR 0303718
(43) Date de publication de la demande: 29.09.2004
(73) Titulaire: Renault, 78288 Guyancourt (FR)
(72) Inventeur: Bailly, Thierry, 78760 Pontchartrain (FR)

(56) Documents cités:
- DE-A- 19 934 446
- FR-A- 2 675 746
- US-B1- 6 464 280

## Description

La présente invention concerne un corps de planche de bord d'un véhicule automobile permettant la fixation rapide et aisée d'un compteur.

Plus particulièrement, la présente invention concerne un corps de planche de bord d'un véhicule automobile permettant la fixation d'un compteur du type comprenant des tourillons de fixation latérale et une patte de fixation inférieure, le corps comprenant des moyens de réception desdits tourillons et des moyens de réception de ladite patte de fixation. La présente invention concerne également une planche de bord de véhicule automobile comportant un tel corps de planche.

Les compteurs comportent, classiquement, deux tourillons de fixation latérale qui équipent les côtés de la partie supérieure du compteur et une patte de fixation inférieure, disposée au niveau de la partie inférieure du compteur. Les deux tourillons viennent s'encliqueter dans des moyens de réception et de fixation adaptés, par exemple des moyens de clipsage, qui sont disposés sur le corps de planche. Ces deux tourillons permettent de fixer le compteur selon un premier axe. Le compteur peut néanmoins tourner autour de cet axe et se déplacer en translation selon cet axe. La patte de fixation inférieure permet d'achever la fixation du compteur en coopération avec les moyens de réception du corps de planche. Elle est en général vissée sur le corps de planche et comporte, dans ce but, une perforation que l'on doit faire coïncider avec une perforation ménagée dans le corps de planche de bord. Au préalable, il faut, de plus, munir le corps de planche d'une agrafe comportant un filetage, afin de pouvoir effectuer la fixation par vissage.

Lorsque la patte de fixation inférieure est fixée sur le corps de planche, le compteur ne peut plus, ni se déplacer en translation, ni tourner autour de l'axe matérialisé par les deux tourillons. La fixation du compteur sur le corps de planche est faite en série et doit donc être rapide et aisée.

DE 199 34 446 décrit un corps de planche de bord d'un véhicule automobile permettant la fixation d'un compteur selon le préambule de la revendication 1.

La Demanderesse a développé un nouveau concept de planche de bord qui présente un barreau horizontal devant la fixation inférieure, lequel barreau constitue un obstacle au passage d'une visseuse pour le montage en série.

La présente invention a pour but de proposer un corps de planche de bord qui permet une fixation facile et rapide de la patte de fixation inférieure d'un compteur du type précité, même en présence d'un tel obstacle frontal.

Ce but est atteint au moyen d'un corps de planche de bord permettant la fixation d'un compteur du type comportant des tourillons de fixation latérale et une patte de fixation inférieure, le corps comprenant des moyens de réception desdits tourillons et des moyens de réception de ladite patte de fixation ; de manière caractéristique, selon l'invention, l'extrémité de la patte de fixation est maintenue par au moins un moyen de clipsage, ladite patte de fixation comportant une perforation localisée en vis-à-vis avec une perforation réalisée sur les moyens de réception dans le but de recevoir un moyen de fixation en complément ou en substitution du moyen de clipsage. Avantageusement, le corps de planche est associé avec un obstacle frontal à l'avant desdits moyens de réception de la patte de fixation, et lesdits moyens de réception de la patte de fixation sont agencés pour recevoir la patte de fixation sans interférer avec ledit obstacle frontal. Avantageusement encore, l'axe du moyen de fixation forme un angle avec l'axe sensiblement perpendiculaire à la patte de fixation.

Selon un premier mode de réalisation, lesdits moyens de réception de la patte de fixation comportent des moyens de guidage de la patte de fixation inférieure du compteur.

Le corps de planche de l'invention facilite donc la mise en place de la patte de fixation inférieure sur le corps de planche, celle-ci étant guidée vers la zone de fixation ad hoc du corps de planche. L'alignement des perforations de la patte de fixation et du corps de planche peut ainsi être mis en oeuvre rapidement et de manière sûre, quasiment « en aveugle ».

Le mode de réalisation des moyens de guidage n'est pas limité selon l'invention. Il peut s'agir, par exemple d'au moins deux nervures de guidage judicieusement disposées à proximité de la zone de fixation de la patte de fixation inférieure, c'est-à-dire la zone du corps de planche venant en contact avec la patte de fixation inférieure, lorsque le compteur est fixé sur le corps de planche.

Grâce à ces moyens de guidage de la patte, il est possible de fixer celle-ci par des moyens de fixation rapides et simples, en particulier des moyens de fixation sans vissage, comme par exemple de simples moyens d'encliquetage (constituant le moyen de clipsage), au moyen notamment d'une languette de clipsage de la patte de fixation.. Dans ce cas, la fixation du compteur est grandement facilitée, les opérations de pose d'agrafe sur le corps de planche et de vissage étant supprimées. De plus, le compteur peut également être facilement démonté.

Selon un second mode de réalisation, qui peut d'ailleurs être combiné au premier mode de réalisation, les moyens de réception et de fixation de la patte sont adaptés pour permettre une fixation sans vissage en utilisant le trou de fixation de la patte, et consistent par exemple en un plasti-rivet ou un clip de fixation en sapin. Là encore, les opérations de pose d'agrafe sur le corps de planche et de vissage sont supprimées. Quand les moyens de guidage sont aussi utilisés, le guidage de la patte de fixation inférieure permet de faire immédiatement coïncider les perforations en sorte d'y introduire l'élément de fixation ce qui réduit le temps nécessaire à la fixation du compteur.

Selon un troisième mode de réalisation de l'invention, qui peut éventuellement être combiné avec l'un ou l'autre des deux premiers modes, le corps de planche peut également comporter, en outre, des moyens d'appui de la patte de fixation inférieure du compteur qui viennent en contact avec la patte inférieure de fixation pour la fixation de cette dernière. Ces moyens d'appui permettent, notamment, d'adapter facilement la forme du corps de planche lorsque celui-ci ne présente pas de zone susceptible de venir directement au contact de la patte de fixation inférieure du compteur.

De manière particulièrement avantageuse, lorsqu'ils sont utilisés seuls notamment, ces moyens d'appui peuvent être conformés en sorte que, lorsque la patte de fixation est mise à leur contact, la zone du corps de planche comportant ces moyens d'appui et la patte inférieure de fixation forment un angle. Plus précisément, les moyens de réception de la patte de fixation et la patte de fixation elle-même sont de préférence adaptés pour que l'axe de fixation ne rencontre pas l'obstacle frontal et permettent ainsi l'utilisation d'une fixation par vis avec visseuse.

La présente invention concerne également une planche de bord qui, de manière caractéristique comporte un corps de planche selon l'invention.

La présente invention, ses caractéristiques et les divers avantages qu'elle procure apparaîtront mieux à la lecture de la description qui suit de plusieurs exemples de réalisation de la présente invention et qui fait référence aux dessins annexés sur lesquels :
- la figure 1 représente en coupe un premier mode de réalisation de l'invention, avec languette de clipsage de la patte de fixation
- la figure 2 représente une vue partielle, en perspective, du détail des moyens de réception de la patte dans le mode de réalisation de la figure 1, le compteur n'étant pas encore fixé sur le corps de planche ;
- la figure 3 représente une vue partielle, en perspective, du détail des moyens de réception de la patte dans le mode de réalisation de la figure 1, le compteur étant fixé sur le corps de planche
- les figures 4 et 5 représentent en coupe une vue partielle deux variantes des moyens de fixation de patte selon un deuxième mode de réalisation de l'invention ;
- la figure 6 représente en coupe un troisième mode de réalisation de l'invention, avec moyens d'inclinaison de l'axe de fixation de la patte par rapport au barreau frontal ;
- la figure 7 montre une vue partielle, en perspective, du détail de réalisation des moyens d'appui équipant le corps de planche de bord de l'invention de la figure 6;
- la figure 8 représente une vue en perspective d'un capteur destiné à être monté sur la planche de bord de l'invention, et
- La figure 9 est une vue en coupe de la solution de montage de l'art antérieur.

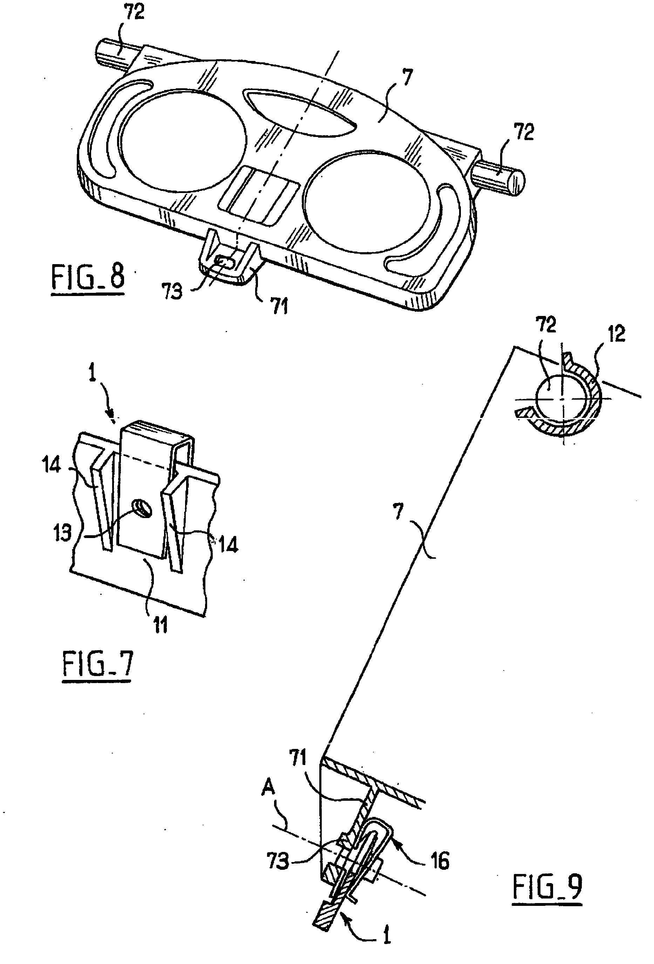

On se référera d'abord aux figures 8 et 9. La figure 8 montre un compteur 7 comportant une patte de fixation inférieure 71 munie d'un orifice 73 traversant, et deux tourillons latéraux supérieurs 72. Pour sa fixation au corps de planche de bord 1, selon l'art antérieur, on clipse les tourillons dans deux moyens de clipsage latéral 12 et on prévoit sur le corps de planche 1 une agrafe 16 de vissage, permettant le vissage selon un axe A perpendiculaire au plan moyen de la patte 71 et du compteur. Ceci impose que l'espace en avant de l'axe A soit libéré pour laisser la place au passage de la visseuse. Or cet espace est occupé par un barreau frontal dans le cas des modes de réalisation de la présente invention.

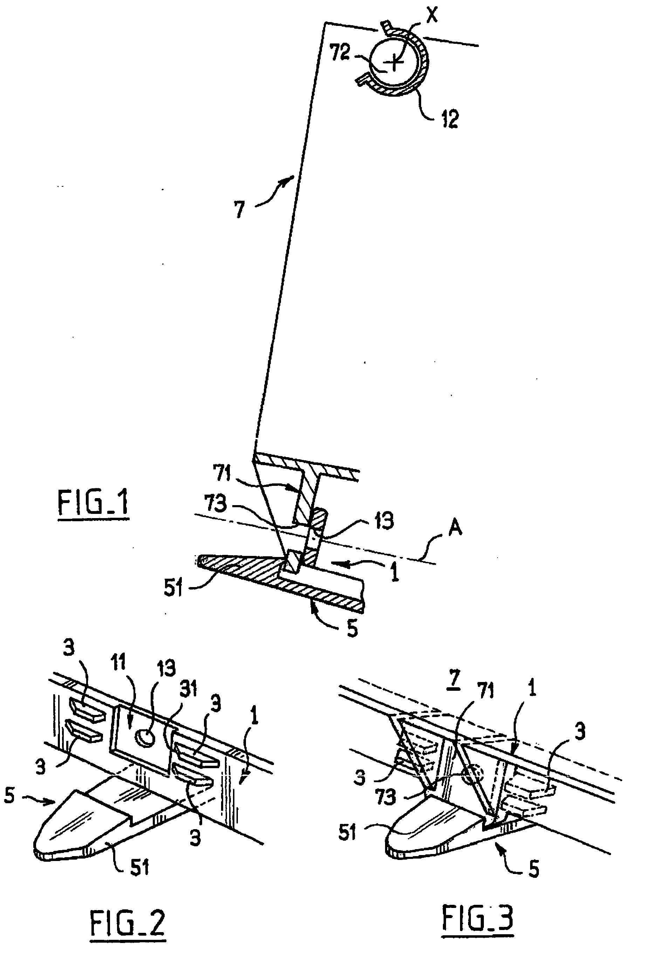

On se reporte maintenant aux figures 1 à 3, illustrant un premier mode de réalisation.

Le corps de planche de bord 1 de l'invention comporte une zone de fixation 11 à laquelle la patte de fixation inférieure 71 du compteur 7 peut être solidarisée. Le corps de planche 1 comporte des moyens de guidage de cette patte de fixation inférieure qui, dans le mode de réalisation particulier ici représenté, comportent quatre nervures de guidage 3 disposées face à face, deux à deux, de part et d'autre de la zone de fixation 11. Ces nervures de guidage 3 aident au positionnement de la patte de fixation inférieure du compteur sur le corps de planche 1. Comme représenté, ces nervures de guidage 3 peuvent comporter, en regard de la zone de fixation 11, une face 31 qui présente une pente orientée vers la zone de fixation 11. Cette face 31 permet de guider par glissement la patte de fixation inférieure du compteur vers la zone de fixation 11, lorsque la patte de fixation inférieure vient en butée contre les nervures 31.

En référence aux figures 1 et 3, lorsque le compteur 7 est fixé sur le corps de planche 1, la patte de fixation inférieure 71 est disposée entre les nervures de guidage 3. Le léger déplacement en translation qui reste possible entre les nervures de guidage 3 est supprimé par la fixation de la patte de fixation inférieure 71 sur le corps de planche 1.

Les moyens de fixation de cette patte de fixation inférieure 71 sont dans le mode de réalisation représenté sur les figures 1 à 3, constitués d'une languette de fixation par clipsage 5 fixée au corps de planche 1. Cette languette de fixation 5 comporte une extrémité 51 apte à coopérer avec la patte de fixation inférieure 71 du compteur 7. Comme représenté sur la figure 1, lorsque le compteur 7 est monté sur le corps de planche 1, les tourillons 72 sont emboîtés dans des moyens de fixation adaptés 12 équipant le corps de planche 1. La patte de fixation inférieure 71 vient au contact de la zone de fixation 11 du corps de planche 1 et sa portion inférieure vient s'encliqueter dans l'espace formé entre la zone de fixation 11 et le bord interne de l'extrémité 51 de la languette de fixation 5.

Comme représenté sur les figures 1 à 3, le corps de planche 1 peut également comprendre une perforation 13 disposée sur la zone de fixation Il en sorte de pouvoir coïncider avec la perforation 73 de la patte de fixation inférieure du compteur. Ces perforations qui permettent ordinairement de fixer la patte de fixation inférieure 71 sur le corps de planche 1 par vissage, peuvent être utiliser ici pour des moyens ne faisant pas appel au vissage afin de ne pas être gêné par le barreau frontal. En cas de détérioration, d'usure ou de rupture de la languette de fixation 5, il est ainsi encore possible de fixer la patte de fixation inférieure du compteur sur le corps de planche, lors d'un démontage en après-vente par exemple,

La mise en place du compteur 7 s'effectue de la manière suivante.

Les tourillons 72 étant fixés sur le corps de planche 1, on amène la patte de fixation inférieure 71 du compteur 7 vers la zone de fixation 11. Les nervures de guidage 3 limitent fortement le déplacement en translation selon l'axe X des tourillons et guident la patte de fixation inférieure 71 vers la zone de fixation 11 en sorte que la partie inférieure de cette dernière vient s'encliqueter entre l'extrémité 51 de la languette de fixation 5 et la zone de fixation 11.

Dans le même temps, le guidage de la patte de fixation inférieure 71 par les nervures de guidage 3 permet de faire suffisamment coïncider les perforations 73 et 13 en sorte de pouvoir y insérer un élément de fixation quelconque ne nécessitant pas de débattement frontal.

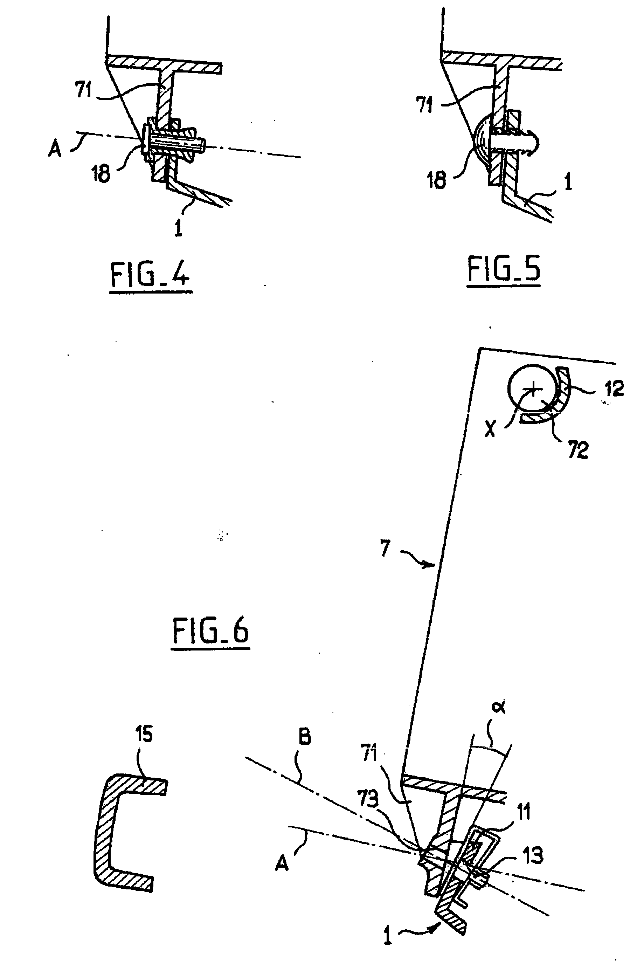

Les figures 4 et 5 illustrent deux exemples de tels éléments de fixation venant s'insérer dans les orifices 73 et 13 respectifs de la patte de fixation 7 et du corps de planche 1. Dans la figure 4, l'élément de fixation 18 est un plasti-rivet composé d'un corps s'enfonçant dans un manchon expansible en plastique. Dans la figure 5, l'élément 18 est un clip de fixation à dents en sapin.

En référence aux figures 6 et 7, on montre des moyens de désaxement de l'axe de fixation, constitués par des moyens d'appui de la patte de fixation inférieure 71 du compteur 7 et comportant deux nervures d'appui inclinées 14. Ces nervures d'appui 14 ont une forme triangulaire de sorte que, comme représenté sur la figure 6, lorsque la patte de fixation 71 du compteur est mise au contact des nervures d'appui 14, elle forme avec la zone de fixation 11 du corps de planche 1 un angle α. Ces nervures d'appui 14 permettent d'obtenir une bonne fixation de la patte de fixation inférieure 71 du compteur alors que, pour des raisons esthétiques ou techniques, le corps de planche et la patte de fixation inférieure ne peuvent venir en contact que sur une faible surface ou ne peuvent pas venir en contact.

Dans le cas présent, ces nervures d'appui 14 permettent de mettre en oeuvre une fixation au moyen des perforations 73 et 13 équipant respectivement, la patte de fixation 71 et le corps de planche 1, et d'une vis (non représentée). La présence de ces nervures d'appui 14 ainsi qu'une simple modification de l'axe des perforations 73 et 13 (l'axe des perforations modifié est représenté par l'axe B), permet d'obtenir une bonne fixation de la patte de fixation 71 du compteur même dans le cas où, par exemple, un barreau 15 du corps de planche 1 est disposé en face de la zone de fixation 11 et empêche par conséquent tout accès à cette zone selon l'axe de fixation standard A. Les nervures d'appui 14 permettent donc, dans ce cas, de fixer un compteur sur une planche de bord existante avec un minimum de modifications du corps de planche et du compteur.

## Revendications

1. Corps de planche de bord (1) d'un véhicule automobile permettant la fixation d'un compteur (7) du type comportant des tourillons de fixation latérale (72) et une patte de fixation inférieure (71), le corps (1) comprenant des moyens de réception (12) desdits tourillons et des moyens de réception (11) de ladite patte de fixation (71), **caractérisé en ce que** l'extrémité de la patte de fixation (71) est maintenue par au moins un moyen de clipsage (5), ladite patte de fixation (71) comportant une perforation (73) localisée en vis-à-vis avec une perforation (13) réalisée sur les moyens de réception (11) dans le but de recevoir un moyen de fixation en complément ou en substitution du moyen de clipsage.

2. Corps de planche de bord (1) selon la revendication 1, **caractérisé en ce que** les dits moyens de réception (11) de la patte de fixation comportent des moyens de guidage (3) de la patte de fixation.

3. Corps de planche de bord (1) selon la revendication 2, **caractérisé en ce que** lesdits moyens de guidage comportent au moins deux nervures de guidage (3).

4. Corps de planche de bord (1) selon l'une quelconque des revendications précédentes, **caractérisé en ce que** le moyen de clipsage (5) est constitué d'une languette de clipsage (51).

5. Corps de planche de bord (1) selon l'une quelconque des revendications 1 à 4, **caractérisé en ce qu'**il comporte en outre des moyens d'appui incliné (14) de ladite patte de fixation inférieure (71) du compteur (7) qui viennent en contact avec ladite patte de fixation inférieure (71) pour la fixation de cette dernière.

6. Corps de planche de bord (1) selon l'une quelconque des revendications 1 à 5, **caractérisé en ce qu**'il comporte un obstacle frontal (15) à l'avant des moyens de réception (11) de la patte de fixation (71).

7. Corps de planche de bord (1) selon l'une quelconque des revendications 1 à 6, **caractérisé en ce que** l'axe (B) du moyen de fixation (18) forme un angle (α) avec l'axe (A) sensiblement perpendiculaire à la patte de fixation (71).

8. Planche de bord d'un véhicule automobile **caractérisée en ce qu**'elle comporte un corps de planche (1) selon l'une quelconque des revendications 1 à 7.

## Claims

1. A dashboard body (1) of a motor vehicle which allows the fastening of an instrument (7) of the type comprising lateral fastening pins (72) and a lower fastening tab (71), the body (1) comprising means (12) for receiving the said pins and means (11) for receiving the said fastening tab (71), **characterized in that** the end of the fastening tab (71) is held in place by at least one clipping means (5), the said fastening tab (71) comprising a perforation (73) located opposite a perforation (13) made in the receiving means (11) with the aim of receiving a fastening means as a complement to or as a substitution for the clipping means.

2. Dashboard body (1) according to Claim 1, **characterized in that** the said means (11) for receiving the fastening tab comprise means (3) for guiding the fastening tab.

3. Dashboard body (1) according to Claim 2, **characterized in that** the said guide means comprise at least two guide ribs (3).

4. Dashboard body (1) according to any one of the preceding claims, **characterized in that** the clipping means (5) consists of a clipping tongue (51).

5. Dashboard body (1) according to any one of Claims 1 to 4, **characterized in that** it additionally comprises inclined bearing means (14) for the said lower fastening tab (71) of the instrument (7) that come into contact with the said lower fastening tab (71) in order to fasten the latter.

6. Dashboard body (1) according to any one of Claims 1 to 5, **characterized in that** it comprises a front obstacle (15) in front of the means (11) for receiving the fastening tab (71).

7. Dashboard body (1) according to any one of Claims 1 to 6, **characterized in that** the axis (B) of the fastening means (18) forms an angle (α) with the axis (A) which is substantially perpendicular to the fastening tab (71).

8. Dashboard of a motor vehicle, **characterized in that** it comprises a dashboard body (1) according to any one of Claims 1 to 7.

## Patentansprüche

1. Armaturenbrettkörper (1) eines Kraftfahrzeugs, der die Befestigung eines Zählers (7) von der Art erlaubt, die Drehzapfen zur seitlichen Befestigung (72) und eine untere Befestigungslasche (71) aufweist, wobei der Körper (1) Aufnahmemittel (12) für die Drehzapfen und Aufnahmemittel (11) für die Befestigungslasche (71) aufweist, **dadurch gekennzeichnet, dass** das Ende der Befestigungslasche (71) von mindestens einem Schnappverbindungsmittel (5) gehalten wird, wobei die Befestigungslasche (71) eine Lochung (73) aufweist, die gegenüber einer Lochung (13) angeordnet ist, die auf den Aufnahmemitteln (11) ausgebildet ist, um ein Befestigungsmittel als Komplement oder als Ersatz des Schnappverbindungsmittels aufzunehmen.

2. Armaturenbrettkörper (1) nach Anspruch 1, **dadurch gekennzeichnet, dass** die Aufnahmemittel (11) für die Befestigungslasche Führungsmittel (3) für die Befestigungslasche aufweisen.

3. Armaturenbrettkörper (1) nach Anspruch 2, **dadurch gekennzeichnet, dass** die Führungsmittel mindestens zwei Führungsrippen (3) aufweisen.

4. Armaturenbrettkörper (1) nach einem der vorhergehenden Ansprüche, **dadurch gekennzeichnet, dass** das Schnappverbindungsmittel (5) aus einer Einschnappzunge (51) besteht.

5. Armaturenbrettkörper (1) nach einem der Ansprüche 1 bis 4, **dadurch gekennzeichnet, dass** er außerdem geneigte Auflagemittel (14) für die untere Befestigungslasche (71) des Zählers (7) aufweist, die mit der unteren Befestigungslasche (71) zu deren Befestigung in Kontakt kommen.

6. Armaturenbrettkörper (1) nach einem der Ansprüche 1 bis 5, **dadurch gekennzeichnet, dass** er ein stirnseitiges Hindernis (15) vor den Aufnahmemitteln (11) der Befestigungslasche (71) aufweist.

7. Armaturenbrettkörper (1) nach einem der Ansprüche 1 bis 6, **dadurch gekennzeichnet, dass** die Achse (B) des Befestigungsmittels (18) einen Winkel (α) mit der Achse (A) im Wesentlichen lotrecht zur Befestigungslasche (71) bildet.

8. Armaturenbrett eines Kraftfahrzeugs, **dadurch gekennzeichnet, dass** es einen Brettkörper (1) nach einem der Ansprüche 1 bis 7 aufweist.
